# FASCICULE DE BREVET EUROPEEN

(11) **EP 3 233 518 B1**
(45) Date de publication et mention de la délivrance du brevet: **06.02.2019**
(21) Numéro de dépôt: 15823641.4
(22) Date de dépôt: 14.12.2015
(51) Int. Cl.: B43K 19/02, B43K 19/16, B43K 19/18

(54) **CRAYON A ECRIRE OU A COLORIER**
STIFT ZUM SCHREIBEN ODER KOLORIEREN
PENCIL FOR WRITING OR COLOURING

(30) Priorité: 17.12.2014 FR 1462664
(43) Date de publication de la demande: 25.10.2017
(73) Titulaire: Conte, 62200 Boulogne sur Mer (FR)
(72) Inventeur: GOUEREC, Julien, 62360 La Capelle-les-Boulogne (FR); LEFEBVRE, Philippe, 62930 Wimereux (FR)
(74) Mandataire: Mendelsohn, Isabelle M. N.
(86) Numéro de dépôt international: PCT/FR2015/053468
(87) Numéro de publication internationale: WO 2016/097554

(56) Documents cités:
- EP-A1- 2 644 407
- WO-A1-01/43987
- DE-U1-202006 015 052
- DE-U1-202008 009 751

## Description

La présente invention concerne les crayons à écrire ou à colorier obtenus par coextrusion comprenant une mine à base de polymère et une matière synthétique de bois.

De tels crayons à écrire ou à colorier sont connus de l'homme du métier. En particulier la demande WO01/43987 indique que ces crayons doivent comprendre une couche protectrice intermédiaire dont le matériau thermoplastique doit avoir un point de solidification inférieur au point de solidification de la matière thermoplastique de la mine afin d'éviter les problèmes de fissuration de la mine lors de son refroidissement. Toutefois dans les exemples de cette demande, la mine et la matière synthétique de bois sont réalisés dans un matériau thermoplastique identique (copolymère polystyrène méthacrylate) et il est préconisé pour cette couche protectrice une épaisseur de 0,3 mm pour une mine ayant un diamètre de 2mm, soit un ratio épaisseur couche protectrice intermédiaire / rayon mine de 0,3. Cette demande précise même que l'épaisseur de cette couche protectrice doit être d'au moins 0,5 mm pour les mines douces.

Or les inventeurs se sont aperçus de façon surprenante que lorsque le matériau thermoplastique de la mine est une polyoléfine et non un copolymère polystyrène méthacrylate comme dans cet exemple, apparait un problème de décohésion entre la mine et la couche protectrice lors de l'opération de taille, ce qui n'est pas souhaitable.

Aucun des arts antérieurs connus à ce jour ne décrit un tel problème. Ainsi, la demande WO2010/006744 décrit également la présence obligatoire d'une couche d'adhésion entre la mine et la matière synthétique de bois pour les crayons dont le polymère de la mine est incompatible avec le polymère de la matière synthétique de bois. Toutefois il n'est à aucun moment indiqué quelle devrait-être l'épaisseur de cette couche et les problèmes de décohésion entre cette couche d'adhésion et la mine ne sont pas évoqués.

La demande US 2006/0194049 décrit également la présence d'une enveloppe protectrice de la mine qui a une résistance à la flexion supérieure à celle de la mine et qui va donc stabiliser la mine pour éviter qu'elle ne se casse. Elle préconise que le volume de l'enveloppe soit plus petit ou égal au volume de la mine. Dans les exemples le ratio aire de la mine / aire de l'enveloppe pour un crayon à papier est de 1 et pour un crayon de couleur de 1,44, ce qui corresponds à un ratio épaisseur de la couche intermédiaire / rayon de la mine respectivement de 0,4 et 0,3. Ceci ne résout donc pas le problème de décohésion entre la mine et la couche de protection lors de l'opération de taille.

Or les inventeurs ont découvert que pour résoudre les problèmes de décohésion lors de l'opération de taille du crayon, tout en maintenant une couche protectrice pouvant remplir les fonctions de couche d'adhésion entre la mine à base de polyoléfine et la matière synthétique de bois à base d'un polymère styrénique et en permettant d'éviter les fissurations de la mine, il était nécessaire d'utiliser une couche protectrice non expansée comprenant un mélange de polystyrène et d'EVA et ayant un ratio épaisseur de la couche intermédiaire protectrice / rayon de la mine compris entre 0,05 et 0,17.

Enfin, grâce à un tel ratio, cette couche peut être rendue visible pour le consommateur par utilisation d'une couleur différente de celle de la mine et de la matière bois synthétique.

La présente invention concerne donc un crayon à écrire ou à colorier comprenant les 3 couches suivantes obtenues par coextrusion :
- une mine non expansée à base de polyoléfine,
- une couche intermédiaire protectrice non expansée entourant la mine et comprenant un mélange de polystyrène et d'EVA et
- une matière synthétique de bois expansée à base d'un polymère styrénique entourant la couche intermédiaire protectrice,
le ratio épaisseur de la couche intermédiaire protectrice / rayon de la mine étant compris entre 0,05 et 0,17, avantageusement entre 0,07 et 0,15.

Le crayon selon la présente invention comprend donc une mine à base de polyoléfine.

On entend au sens de présente invention par « mine à base de polyoléfine », toute mine de crayon à écrire ou à colorier comprenant au moins une polyoléfine. De façon avantageuse la polyoléfine est le principal polymère de la mine. De façon encore plus avantageuse la mine ne comprend pas d'autres polymères. Avantageusement la polyoléfine peut-être du polyéthylène ou du polypropylène, en particulier il s'agit du polypropylène, plus particulièrement du polypropylène homopolymère.

De façon avantageuse la teneur en polyoléfine de la mine est comprise entre 15 et 45 % en poids par rapport au poids total de la composition de la mine, avantageusement entre 20 et 40 % en poids par rapport au poids total de la composition de la mine.

La mine selon la présente invention peut être une mine de crayon à papier ou une mine de crayon de couleurs.

Dans le cas où la mine selon la présente invention est une mine de crayon de papier, elle peut comprendre une teneur en polyoléfine comprise entre 15 et 40 % en poids, avantageusement entre 20 et 35 % en poids, par rapport au poids total de la composition de la mine.

Dans le cas où la mine selon la présente invention est une mine de crayon de couleur elle peut comprendre une teneur en polyoléfine comprise entre 25 et 45 % en poids, avantageusement entre 30 et 40 % en poids, par rapport au poids total de la composition de la mine.

La mine selon la présente invention peut comprendre également des charges minérales, des pigments et/ou des additifs. Avantageusement, la mine ne comprend pas de plastifiant.

Avantageusement la teneur en pigments de la mine est comprise entre 5 et 20 % en poids, la teneur en charge minérale entre 25 et 75 % en poids et/ou la teneur en additifs entre 0 et 40 % en poids, par rapport au poids total de la composition de la mine.

Dans le cas où la mine selon la présente invention est une mine de crayon de papier, elle peut comprendre du graphite et éventuellement une charge minérale incolore. En particulier elle comprend du graphite et une charge minérale incolore. Avantageusement la charge minérale incolore est choisie parmi une argile, du talc, du nitrure de bore, de la silice, du carbonate de calcium, du mica, de la poudre de stéatite et leurs mélanges. De façon particulièrement avantageuse il s'agit d'une charge lamellaire, plus particulièrement choisie parmi une argile, du nitrure de bore, du mica et/ou du talc, par exemple une argile, en particulier choisie parmi la Montmorillonite, la bentonite le kaolin. Avantageusement il s'agit du kaolin.

De façon avantageuse la teneur en graphite de la mine de crayon à papier selon la présente invention est comprise entre 40 et 60%, en particulier entre 44 et 50%, en poids par rapport au poids total de la composition de la mine.

Avantageusement la teneur en charge minérale incolore de la mine de crayon à papier selon la présente invention est comprise entre 5 et 15%, en particulier entre 6 et 10%, en poids par rapport au poids total de la composition de la mine.

Elle peut en outre comprendre en tant que pigment du noir de carbone.

Avantageusement la teneur en noir de carbone de la mine de crayon à papier selon la présente invention est comprise entre 5 et 20%, en particulier entre 5 et 15%, en poids par rapport au poids total de la composition de la mine.

Dans le cas où la mine selon la présente invention est une mine de crayon de couleur, la charge minérale est une charge minérale incolore, en particulier telle que décrite ci-dessus.

Avantageusement la teneur en charge minérale incolore de la mine de crayon de couleur selon la présente invention est comprise entre 25 et 50%, en particulier entre 30 et 40%, en poids par rapport au poids total de la composition de la mine.

Les additifs utilisables dans la mine selon la présente invention peuvent être choisis parmi les agents glissants, les agents de mise en oeuvre, les agents de couplage, les agents dispersants, les lubrifiants et les autres additifs bien connus de l'homme du métier. Par exemple il peut s'agir de stéarate (stéarate de zinc, de calcium, de magnésium, de sodium et leurs mélanges), de cires, de paraffines, d'acides gras, d'amides telle qu'une stéaramide, en particulier l'éthylène bis stéaramide, de glycérol et de ses dérivés tel que le dibéhénate de glycérol, le béhénate de glycérol, le stéarate de glycérol et/ou le diisostéarate de polyglycérol, de siloxane greffé sur du polypropylène et de leurs mélanges, en particulier il s'agit du stéarate de calcium, du stéarate de magnésium, du stéarate de zinc, des amides ou de leur mélange.

La mine selon la présente invention est non expansée. Ainsi donc aucun agent d'expansion n'est utilisé lors de son procédé de fabrication. En outre la polyoléfine utilisée n'est pas expansée.

Dans un mode de réalisation particulier de la présente invention, la mine a un diamètre compris entre 2 et 3,6 mm.

En particulier dans le cas des mines fines, la mine a un diamètre compris entre 2 et 2,3 mm. Dans ce cas, avantageusement le ratio épaisseur de la couche intermédiaire protectrice / rayon de la mine est compris entre 0,05 et 0,16, avantageusement entre 0,06 et 0,15, plus avantageusement entre 0,07 et 0,15.

Dans le cas des mines épaisses, la mine a un diamètre compris entre 3 et 3,6 mm. Dans ce cas, avantageusement le ratio épaisseur de la couche intermédiaire protectrice / rayon de la mine est compris entre 0,07 et 0,16, avantageusement entre 0,08 et 0,15, plus avantageusement entre 0,09 et 0,15.

La mine selon la présente invention doit donc comporter des charges et pigments pour l'écriture facilement transférables sur le support d'écriture ou de coloriage pour avoir un bon pouvoir couvrant.

Le crayon selon la présente invention comprend une couche intermédiaire protectrice non expansée entourant, avantageusement de façon concentrique, la mine et comprenant un mélange de polystyrène et d'EVA. Cette couche intermédiaire a un double rôle :
Tout d'abord elle va permettre d'assurer l'adhésion entre la mine à base de polyoléfine et la matière synthétique de bois à base d'un polymère styrénique.

Elle va également permettre de compenser le retrait de la mine lors de l'étape de refroidissement après l'étape de coextrusion, ce qui va éviter les problèmes de fissuration de la mine.

Cette couche intermédiaire protectrice va donc séparer totalement la mine de la matière synthétique de bois.

Dans un mode de réalisation avantageux, la couche intermédiaire protectrice a une épaisseur comprise entre 0,05 et 0,31 mm, plus avantageusement entre 0,07 et 0,27 mm, en particulier entre 0,08 et 0,17 mm.

En particulier dans le cas des mines fines, la couche intermédiaire protectrice a avantageusement une épaisseur comprise entre 0,05 et 0,18 mm, avantageusement entre 0,07 et 0,17 mm, en particulier entre 0,08 et 0,17 mm.

Dans le cas des mines épaisses, la couche intermédiaire protectrice a avantageusement une épaisseur comprise entre 0,13 et 0,31 mm, plus avantageusement entre 0,15 et 0,28 mm, en particulier entre 0,16 et 0,27 mm.

La couche intermédiaire protectrice selon la présente invention comprend un mélange de polystyrène et d'EVA (éthyle vinyle acétate), avantageusement elle est constituée par un mélange de polystyrène et d'EVA. De façon avantageuse le polystyrène est un polystyrène atactique. Dans le cadre de la présente invention, le polystyrène a pour but de permettre l'adhésion entre la couche intermédiaire protectrice et la matière synthétique de bois ainsi que de permettre la bonne tenue mécanique de cette couche.

De façon avantageuse l'EVA comprend entre 10 et 40% en poids d'acétate de vinyle, en particulier entre 20 et 30% en poids, par rapport au poids total de l'EVA. Dans le cadre de la présente invention, l'EVA a pour but de permettre l'adhésion entre la couche intermédiaire protectrice et la mine et de diminuer le point de solidification (appelé couramment point de ramollissement) du polystyrène de façon à ce que le point de solidification du mélange polystyrène et EVA soit inférieur au point de solidification de la polyoléfine de la mine.

Dans un mode de réalisation avantageux, la teneur du mélange de polystyrène et d'EVA de la couche intermédiaire protectrice est comprise entre 85 et 100 % en poids par rapport au poids total de la couche intermédiaire protectrice (100 % correspond à une couche intermédiaire protectrice constituée par un mélange de polystyrène et d'EVA), avantageusement entre 90 et 97 % en poids par rapport au poids total de la couche intermédiaire protectrice, plus avantageusement entre 93 et 96% en poids par rapport au poids total de la couche intermédiaire protectrice.

La couche intermédiaire protectrice peut comprendre en outre des pigments, tels qu'un mélange maitre, qui servent en particulier à apporter de la couleur à cette couche.

Avantageusement, la teneur en pigments de cette couche est comprise entre 3 et 10 % en poids par rapport au poids total de la couche intermédiaire protectrice, plus avantageusement entre 4 et 7 % en poids par rapport au poids total de la couche intermédiaire protectrice.

Dans un mode de réalisation particulier la couche intermédiaire protectrice a une couleur différente de la mine et de la matière synthétique de bois. Ceci permet donc à cette couche d'être visible pour le consommateur, ce qui peut avoir un intérêt esthétique et permet de jouer avec les différentes couleurs pour rendre le crayon très distinctif et attractif.

Dans un autre mode réalisation avantageux, cette couche à la même couleur que celle de la mine, ce qui permet de donner au consommateur l'impression que le crayon a une mine plus épaisse.

Avantageusement la teneur en polystyrène de la couche intermédiaire protectrice est comprise entre 40 et 90% en poids, plus avantageusement entre 40 et 75% en poids, encore plus avantageusement entre 45 et 70 % en poids, par rapport au poids total de la couche intermédiaire protectrice. De façon avantageuse la teneur en EVA de la couche intermédiaire protectrice est comprise entre 10 et 60 % en poids, avantageusement entre 20 et 55% en poids, encore plus avantageusement entre 25 et 50 % en poids, par rapport au poids total de la couche intermédiaire protectrice. Par ailleurs la couche intermédiaire protectrice est non expansée. Ainsi donc aucun agent d'expansion n'est utilisé lors de son procédé de fabrication. En outre le polystyrène utilisé n'est pas expansé.

De plus, avantageusement la couche intermédiaire protectrice n'a pas une résistance à la flexion supérieure à celle de la mine.

En outre, avantageusement la couche intermédiaire protectrice n'a pas la même fonction que la mine, c'est-à-dire n'est pas destinée à écrire ou à colorier. Les pigments éventuellement présents dans cette couche ne sont donc pas transférables facilement sur le support d'écriture et n'ont donc pas un bon pouvoir couvrant.

Elle a avantageusement en revanche une température de fusion égale ou inférieure à la fois à celle de la mine et à celle de la matière synthétique de bois.

Le crayon selon la présente invention comprend en outre une matière synthétique de bois expansée à base de polymère styrénique et entourant, avantageusement de façon concentrique, la couche intermédiaire protectrice.

On entend au sens de présente invention par «matière synthétique de bois », toute matière synthétique de crayon à écrire ou à colorier à base de polymère dont la densité et la taillabilité se rapprochent de celles du bois.

On entend au sens de présente invention par «matière synthétique de bois à base de polymère styrénique», toute matière synthétique de bois telle que définie ci-dessus comprenant au moins un polymère styrénique, c'est-à-dire un polymère ou copolymère à base de styrène. De façon avantageuse le polymère styrénique est le principal polymère de la matière synthétique de bois. De façon encore plus avantageuse la matière synthétique de bois ne comprend pas d'autres polymères. Avantageusement le polymère styrénique peut-être du polystyrène, de l'ABS (acrylonitrile - butadiène - styrène) ou un copolymère polystyrène méthacrylate, en particulier il s'agit du polystyrène, plus particulièrement du polystyrène atactique.

De façon avantageuse la teneur en polymère styrénique, en particulier en polystyrène, de la matière synthétique de bois est comprise entre 60 et 100 % en poids, avantageusement entre 70 et 98 % en poids, en particulier entre 80 et 95% en poids, par rapport au poids total de la matière synthétique de bois.

La matière synthétique de bois peut contenir, outre le polymère styrénique, des pigments (quelques % en poids, en particulier entre 0 et 5% en poids, avantageusement entre 0,5 et 2% en poids, par rapport au poids total de la composition de la matière synthétique de bois), tels qu'un mélange maitre et/ou de l'oxyde de fer rouge, en particulier pour conférer une couleur proche du bois à la matière synthétique de bois, des plastifiants, de la sciure de bois, des charges minérales (quelques % en poids, avantageusement entre 0 et 10% en poids, en particulier entre 2 et 6% en poids, plus particulièrement entre 3 et 5% en poids, par rapport au poids total de la composition de la matière synthétique de bois), en particulier incolores tels que des argiles, par exemple du kaolin, et/ou d'autres additifs tels que le stéarate de calcium et/ou une stéaramide (quelques % en poids, avantageusement entre 0 et 5% en poids, en particulier entre 1 et 3% en poids, par rapport au poids total de la composition de la matière synthétique de bois).

La matière synthétique de bois est expansée de façon à obtenir une densité proche de celle du bois. Pour obtenir une matière synthétique de bois expansée, avantageusement un agent expansant, tel que par exemple de l'azo-dicarbonamide, a été ajouté à la composition de la matière synthétique de bois avant l'extrusion.

Les trois couches sont obtenues par coextrusion, le crayon selon la présente invention est fabriqué par un procédé en continu. En particulier ce procédé est tel que décrit dans la demande WO01/43987. L'ensemble du crayon selon la présente invention doit avoir une bonne taillabilité et une densité proche de celle du crayon traditionnel en bois. Dans un mode de réalisation particulier de la présente invention, le crayon à écrire ou à colorier selon l'invention comprend une couche supplémentaire de décoration, avantageusement de vernis, entourant, en particulier de façon concentrique, la matière synthétique de bois. Avantageusement la couche de décoration est réalisée dans un matériau compatible avec celui de la matière synthétique de bois.

Avantageusement le crayon à écrire ou à colorier selon la présente invention peut avoir une section hexagonale, ronde ou triangulaire, avantageusement ronde ou hexagonale.

Da façon avantageuse, il peut comporter un moyen pour effacer, telle qu'une gomme, à l'extrémité non taillée du crayon.

L'invention sera mieux comprise à la lecture de la description des figures et des exemples qui suivent.
La figure 1 représente une section transversale d'un exemple de crayon à papier à section hexagonale selon l'invention.
La figure 2 représente une vue en perspective de l'exemple de crayon à papier à section hexagonale selon l'invention.

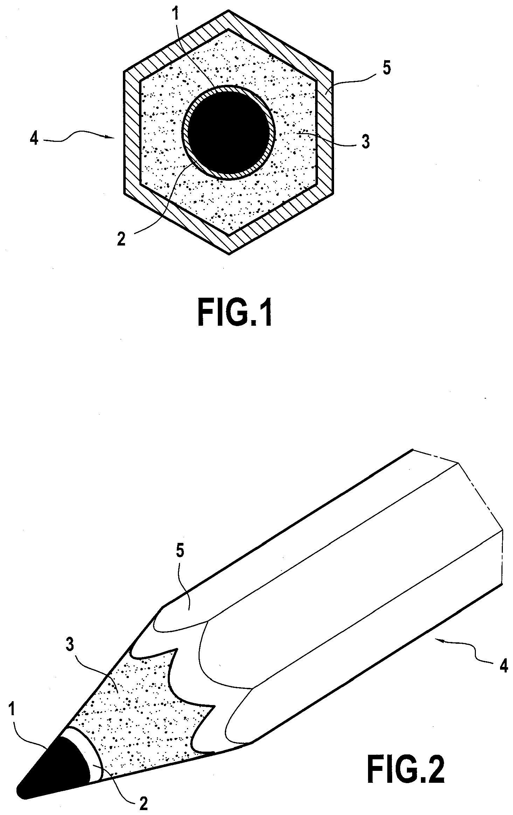

L'exemple de crayon à papier de section hexagonale 4 selon l'invention représenté sur les figures 1 et 2 comprend donc quatre couches, la mine (1) de section circulaire, la couche intermédiaire protectrice (2) de section circulaire qui entoure de façon concentrique la mine (1), la matière synthétique de bois expansée (3) de section hexagonale qui entoure de façon concentrique la couche intermédiaire protectrice et une couche de décoration (5) de section hexagonale qui entoure de façon concentrique la matière synthétique de bois.

La couche intermédiaire protectrice 2 a une couleur différente de la mine et de la matière synthétique bois et est donc visible à la fois sur la section transversale du crayon (figure 1) mais également sur la partie taillée du crayon (figure 2).

### Exemple 1 :

Un crayon à papier de section hexagonale comme illustrée dans les figures 1 et 2 ou de section triangulaire selon l'invention a été fabriqué par coextrusion.

Les compositions des différentes couches sont les suivantes :
- mine: polypropylène (PP, 25-35%), graphite (40-50%) + additifs/pigments
- couche intermédiaire protectrice: polystyrène (40-50%), EVA (45-55%) + pigments
- matière synthétique de bois (3) : polystyrène (90-95%) + additifs/pigments/charge minérale incolore

Différentes épaisseurs de la couche intermédiaire protectrice et différents diamètres de la mine ont été testés.

Un contrôle visuel est effectué après l'étape d'aiguisage du crayon. Lorsque la couche intermédiaire protectrice a tendance à se décoller de la mine lors de l'aiguisage, le produit est considéré comme «non acceptable».

| **Crayon à papier de section hexagonal de diamètre de mine 2,30 mm** | | |
|---|---|---|
| **Epaisseur de la couche intermédiaire protectrice (mm)** | **Ratio épaisseur couche intermédiaire protectrice / rayon mine** | **Résultat** |
| 0,08 | 0,07 | **Acceptable** |
| 0,15 | 0,13 | **Acceptable** |
| 0,17 | 0,15 | **Acceptable** |
| 0,22 | 0,19 | **Non acceptable** |

| **Crayon à papier de section triangulaire de diamètre de mine 3,55 mm** | | |
|---|---|---|
| **Epaisseur de la couche intermédiaire protectrice (mm)** | **Ratio épaisseur couche intermédiaire protectrice / rayon mine** | **Résultat** |
| 0,16 | 0,09 | **Acceptable** |
| 0,27 | 0,15 | **Acceptable** |
| 0,39 | 0,22 | **Non acceptable** |

## Revendications

1. Crayon à écrire ou à colorier comprenant les 3 couches suivantes obtenues par coextrusion :
- une mine non expansée à base de polyoléfine,
- une couche intermédiaire protectrice non expansée entourant la mine et comprenant un mélange de polystyrène et d'EVA et
- une matière synthétique de bois expansée à base d'un polymère styrénique entourant la couche intermédiaire protectrice,
le ratio épaisseur de la couche intermédiaire protectrice /rayon de la mine étant compris entre 0,05 et 0,17, avantageusement entre 0,07 et 0,15.

2. Crayon à écrire ou à colorier selon la revendication 1, **caractérisé en ce que** la polyoléfine de la mine est du polypropylène.

3. Crayon à écrire ou à colorier selon l'une quelconque des revendications 1 ou 2, **caractérisé en ce que** la couche intermédiaire protectrice a une épaisseur comprise entre 0,05 et 0,31 mm, avantageusement entre 0,07 et 0,27 mm, en particulier entre 0,08 et 0,17mm.

4. Crayon à écrire ou à colorier selon l'une quelconque des revendications 1 à 3, **caractérisé en ce que** la mine a un diamètre compris entre 2 et 3,6 mm, avantageusement entre 2 et 2,3 mm.

5. Crayon à écrire ou à colorier selon l'une quelconque des revendications 1 à 4, **caractérisé en ce que** la couche intermédiaire protectrice a une couleur différente de la mine et de la matière synthétique de bois.

6. Crayon à écrire ou à colorier selon l'une quelconque des revendications 1 à 5, **caractérisé en ce que** la teneur du mélange de polystyrène et d'EVA de la couche intermédiaire protectrice est comprise entre 85 et 100 %, avantageusement entre 90 et 97 %, en poids par rapport au poids total de la couche intermédiaire protectrice.

7. Crayon à écrire ou à colorier selon l'une quelconque des revendications 1 à 6, **caractérisé en ce que** la teneur en polystyrène de la couche intermédiaire protectrice est comprise entre 40 et 90% en poids, avantageusement entre 40 et 75% en poids, par rapport au poids total de la couche intermédiaire protectrice.

8. Crayon à écrire ou à colorier selon l'une quelconque des revendications 1 à 7, **caractérisé en ce que** la teneur en EVA de la couche intermédiaire protectrice est comprise entre 10 et 60 % en poids, avantageusement entre 20 et 55% en poids, par rapport au poids total de la couche intermédiaire protectrice.

9. Crayon à écrire ou à colorier selon l'une quelconque des revendications 1 à 8, **caractérisé en ce que** la teneur en polymère styrénique de la matière synthétique de bois est comprise entre 60 et 100 % en poids, avantageusement entre 70 et 98 % en poids, par rapport au poids total de la matière synthétique de bois.

10. Crayon à écrire ou à colorier selon l'une quelconque des revendications 1 à 9, **caractérisé en ce que** le polymère styrénique de la matière synthétique de bois est du polystyrène.

11. Crayon à écrire ou à colorier selon l'une quelconque des revendications 1 à 10, **caractérisé en ce que** la mine ne comprend pas de plastifiant.

12. Crayon à écrire ou à colorier selon l'une quelconque des revendications 1 à 11, **caractérisé en ce qu'**il s'agit d'un crayon à papier et **en ce que** la mine comprend du graphite.

13. Crayon à écrire ou à colorier selon l'une quelconque des revendications 1 à 11, **caractérisé en ce qu'**il s'agit d'un crayon de couleur.

14. Crayon à écrire ou à colorier selon l'une quelconque des revendications 1 à 13, **caractérisé en ce qu'**il comprend une couche supplémentaire de décoration, avantageusement de vernis, entourant, avantageusement de façon concentrique, la matière synthétique de bois.

## Patentansprüche

1. Stift zum Schreiben oder Kolorieren, der die 3 folgenden Schichten umfasst, die durch Koextrusion erhalten werden:
- eine nicht geschäumte Mine auf Polyolefinbasis,
- eine nicht geschäumte schützende Zwischenschicht, die die Mine umgibt und eine Mischung aus Polystyrol und EVA umfasst, und
- einen Kunststoff aus Holzschaum auf Basis eines Styrolpolymers, der die schützende Zwischenschicht umgibt,
wobei das Verhältnis Dicke der schützenden Zwischenschicht/Radius der Mine zwischen 0,05 und 0,17, vorteilhafterweise zwischen 0,07 und 0,15, liegt.

2. Stift zum Schreiben oder Kolorieren nach Anspruch 1, **dadurch gekennzeichnet, dass** das Polyolefin der Mine Polypropylen ist.

3. Stift zum Schreiben oder Kolorieren nach einem der Ansprüche 1 oder 2, **dadurch gekennzeichnet, dass** die schützende Zwischenschicht eine Dicke aufweist, die zwischen 0,05 und 0,31 mm, vorteilhafterweise zwischen 0,07 und 0,27 mm, insbesondere zwischen 0,08 und 0,17 mm, liegt.

4. Stift zum Schreiben oder Kolorieren nach einem der Ansprüche 1 bis 3, **dadurch gekennzeichnet, dass** die Mine einen Durchmesser aufweist, der zwischen 2 und 3,6 mm, vorteilhafterweise zwischen 2 und 2,3 mm, liegt.

5. Stift zum Schreiben oder Kolorieren nach einem der Ansprüche 1 bis 4, **dadurch gekennzeichnet, dass** die schützende Zwischenschicht eine Farbe aufweist, die sich von derjenigen der Mine und des Holzkunststoffs unterscheidet.

6. Stift zum Schreiben oder Kolorieren nach einem der Ansprüche 1 bis 5, **dadurch gekennzeichnet, dass** der Gehalt der Mischung aus Polystyrol und EVA der schützenden Zwischenschicht zwischen 85 und 100 Gew.-%, vorteilhafterweise zwischen 90 und 97 Gew.-%, im Verhältnis zum Gesamtgewicht der schützenden Zwischenschicht liegt.

7. Stift zum Schreiben oder Kolorieren nach einem der Ansprüche 1 bis 6, **dadurch gekennzeichnet, dass** der Polystyrolgehalt der schützenden Zwischenschicht zwischen 40 und 90 Gew.-%, vorteilhafterweise zwischen 40 und 75 Gew.-%, im Verhältnis zum Gesamtgewicht der schützenden Zwischenschicht liegt.

8. Stift zum Schreiben oder Kolorieren nach einem der Ansprüche 1 bis 7, **dadurch gekennzeichnet, dass** der EVA-Gehalt der schützenden Zwischenschicht zwischen 10 und 60 Gew.-%, vorteilhafterweise zwischen 20 und 55 Gew.-%, im Verhältnis zum Gesamtgewicht der schützenden Zwischenschicht liegt.

9. Stift zum Schreiben oder Kolorieren nach einem der Ansprüche 1 bis 8, **dadurch gekennzeichnet, dass** der Gehalt an Styrolpolymer des Holzkunststoffs zwischen 60 und 100 Gew.-%, vorteilhafterweise zwischen 70 und 98 Gew.-%, im Verhältnis zum Gesamtgewicht des Holzkunststoffs liegt.

10. Stift zum Schreiben oder Kolorieren nach einem der Ansprüche 1 bis 9, **dadurch gekennzeichnet, dass** das Styrolpolymer des Holzkunststoffs Polystyrol ist.

11. Stift zum Schreiben oder Kolorieren nach einem der Ansprüche 1 bis 10, **dadurch gekennzeichnet, dass** die Mine keinen Weichmacher umfasst.

12. Stift zum Schreiben oder Kolorieren nach einem der Ansprüche 1 bis 11, **dadurch gekennzeichnet, dass** es sich um einen Bleistift handelt und dass die Mine Graphit umfasst.

13. Stift zum Schreiben oder Kolorieren nach einem der Ansprüche 1 bis 11, **dadurch gekennzeichnet, dass** es sich um einen Buntstift handelt.

14. Stift zum Schreiben oder Kolorieren nach einem der Ansprüche 1 bis 13, **dadurch gekennzeichnet, dass** er eine zusätzliche Dekorationsschicht, vorteilhafterweise aus Lack, umfasst, die den Holzkunststoff, vorteilhafterweise auf konzentrische Art und Weise, umgibt.

## Claims

1. A writing or color pencil comprising the following 3 layers obtained by coextrusion:
- a polyolefin-based non-expanded lead,
- a non-expanded protective intermediate layer surrounding the lead and comprising a mixture of polystyrene and EVA, and
- an expanded synthetic wood material based on a styrene polymer surrounding the protective intermediate layer,
the protective intermediate layer thickness / lead radius ratio being between 0.05 and 0.17, advantageously between 0.07 and 0.15.

2. The writing or color pencil as claimed in claim 1, **characterized in that** the polyolefin of the lead is polypropylene.

3. The writing or color pencil as claimed in either of claims 1 and 2, **characterized in that** the protective intermediate layer has a thickness of between 0.05 and 0.31 mm, advantageously between 0.07 and 0.27 mm, in particular between 0.08 and 0.17 mm.

4. Writing or color pencil as claimed in any one of claims 1 to 3, **characterized in that** the lead has a diameter of between 2 and 3.6 mm, advantageously between 2 and 2.3 mm.

5. The writing or color pencil as claimed in any one of claims 1 to 4, **characterized in that** the protective intermediate layer has a different color from the lead and from the synthetic wood material.

6. The writing or color pencil as claimed in any one of claims 1 to 5, **characterized in that** the content of the mixture of polystyrene and EVA of the protective intermediate layer is between 85 and 100%, advantageously between 90 and 97% by weight relative to the total weight of the protective intermediate layer.

7. The writing or color pencil as claimed in any one of claims 1 to 6, **characterized in that** the polystyrene content of the protective intermediate layer is between 40 and 90% by weight, advantageously between 40 and 75% by weight, relative to the total weight of the protective intermediate layer.

8. The writing or color pencil as claimed in any one of claims 1 to 7, **characterized in that** the EVA content of the protective intermediate layer is between 10 and 60% by weight, advantageously between 20 and 55% by weight, relative to the total weight of the protective intermediate layer.

9. The writing or color pencil as claimed in any one of claims 1 to 8, **characterized in that** the styrene polymer content of the synthetic wood material is between 60 and 100% by weight, advantageously between 70 and 98% by weight, relative to the total weight of the synthetic wood material.

10. The writing or color pencil as claimed in any one of claims 1 to 9, **characterized in that** the styrene polymer of the synthetic wood material is polystyrene.

11. The writing or color pencil as claimed in any one of claims 1 to 10, **characterized in that** the lead does not comprise any plasticizer.

12. The writing or color pencil as claimed in any one of claims 1 to 11, **characterized in that** it is a paper pencil and **in that** the lead comprises graphite.

13. The writing or color pencil as claimed in any one of claims 1 to 11, **characterized in that** it is a colored pencil.

14. The writing or color pencil as claimed in any one of claims 1 to 13, **characterized in that** it comprises an additional decorative layer, advantageously of varnish, surrounding, advantageously concentrically, the synthetic wood material.
